**Europäisches Patentamt**

**European Patent Office**

**Office européen des brevets**

(11) Numéro de publication: **0 390 636**

**A1**

(12) # DEMANDE DE BREVET EUROPEEN

(21) Numéro de dépôt: **90400720.0**

(51) Int. Cl.⁵: **C08J 7/04, C09D 5/03**

(22) Date de dépôt: **16.03.90**

(30) Priorité: **31.03.89 FR 8904260**

(43) Date de publication de la demande:
**03.10.90 Bulletin 90/40**

(84) Etats contractants désignés:
**AT BE CH DE DK ES FR GB GR IT LI LU NL SE**

(71) Demandeur: **ATOCHEM**
**4 & 8, Cours Michelet La Défense 10**
**F-92800 Puteaux(FR)**

(72) Inventeur: **Berteaud, André-Jean**
**10, Allée des Marronniers**
**F-91210 Draveil(FR)**
Inventeur: **Cuzin, Daniel**
**9, Allée de l'Abbé Emile Bois**
**F-78560 Port Marly(FR)**
Inventeur: **Perillon, Jea-Luc**
**18, Lot Bois Paillefert**
**F-27300 Bernay(FR)**

(54) **Matériau composite comprenant un substrat et un revêtement à base d'une composition polymère procédé de fabrication de ce matériau composite.**

(57) La présente invention concerne un matériau composite comprenant un substrat et un revêtement à base d'une composition polymère recouvrant ledit substrat.

L'invention a également pour objet un procédé de fabrication de ce matériau composite caractérisé en ce que l'énergie nécessaire à la filmification du revêtement sur le substrat est transmise par un rayonnement électromagnétique dans le domaine des micro-ondes.

EP 0 390 636 A1

## MATERIAU COMPOSITE COMPRENANT UN SUBSTRAT ET UN REVETEMENT A BASE D'UNE COMPOSITION POLYMERE PROCEDE DE FABRICATION DE CE MATERIAU COMPOSITE

La présente invention concerne un matériau composite comprenant un substrat et un revêtement à base d'une composition polymère en poudre recouvrant ledit substrat ainsi qu'un procédé de préparation de ce matériau composite tel que l'énergie nécessaire à la filmification de la composition polymère en poudre sur le substrat est transmise par un rayonnement électromagnétique dans le domaine des micro-ondes.

On connaît diverses techniques pour assurer le séchage et/ou la filmification de compositions polymères par rayonnement électromagnétique du domaine des micro-ondes.

Dans le brevet français publié sous le n° 2 176 395 au nom de DONALD MACPHERSON GROUP LIMITED, on a décrit le séchage, par action de micro-ondes, d'un latex ou d'une dispersion d'au moins 2 polymères dont les températures filmogènes sont proches de la température ambiante.

Dans le brevet français publié sous le n° 2 458 323, on a décrit un procédé pour revêtir un substrat du genre verre d'un enduit liquide à base de polymères thermodurcissables que l'on sèche et durcit par application d'énergie de micro-ondes.

Le procédé mis au point par la demanderesse permet de recouvrir des substrats dont la température de fusion est inférieure à la température de filmification du revêtement.

Ce procédé comprend une étape qui consiste à recouvrir le substrat choisi à l'aide d'un revêtement à base d'une composition polymère en poudre, puis une étape qui consiste en la filmification proprement dite du revêtement qui est soumis à un rayonnement électromagnétique.

Le substrat est constitué d'un matériau non conducteur, et de préférence peu ou pas excitable par les micro-ondes.

L'excitabilité d'une molécule par les micro-ondes dépend de son moment dipolaire : une molécule est d'autant plus excitable par les micro-ondes que son moment dipolaire est grand ; à l'inverse une molécule dont le moment dipolaire est nul n'est pas sensible à l'action des micro-ondes.

L'excitabilité d'un matériau par les micro-ondes peut être caractérisé par le coefficient de pertes diélectriques qui correspond à la capacité d'absorption des micro-ondes par l'ensemble des molécules dudit matériau.

Ce coefficient est en général compris entre 0 et 1 et il est supérieur ou égal à 0,1 pour un matériau excitable par les micro-ondes.

Le substrat peut être à base de matière polymère.

Parmi les polymères susceptibles d'entrer dans la composition du substrat, on peut citer les polyoléfines perhalogénées ou non telles que polyéthylène, polypropylène, le polytétrafluoroéthylène, seuls ou en mélange.

Bien que l'épaisseur du substrat ne soit pas critique en ellemême, elle sera de préférence supérieure à 3 mm de manière à ce que ledit substrat ait une certaine rigidité.

Le revêtement conforme à l'invention est à base d'une composition polymère en poudre, de granulométrie moyenne en général inférieure à 200 $\mu$m. Son épaisseur est avantageusement inférieure ou égale à 300 $\mu$m, et de préférence inférieure à 100 $\mu$m.

La composition polymère contient de préférence au moins 50 % en poids d'un ou plusieurs polymères excitables par les micro-ondes.

Parmi les polymères excitables par les micro-ondes, on peut citer les homo- ou copolymères sous forme solide qui dérivent des monomères tels que le méthacrylate de méthyle, l'acétate de vinyle, les esters supérieurs de l'acide acrylique et méthacrylique tels que le méthacrylate de n-butyle, l'acrylate d'isobutyle, les esters de l'acide fumarique, maléique ou les esters vinyliques, les acrylamides, les aminométhacrylates, les hydroxyacrylates, les N-méthylolacrylamides, les acides acrylique et méthacrylique, les halogénures de vinyle ou de vinylidène, les éthers allyliques ou vinyliques, tels que le polyfluorure de vinylidène, les copolymères de fluorure de vinylidène et de un ou plusieurs comonomères perfluorés ou chlorofluorés.

On peut également citer les polyamides et les polyétheramides.

Par polyamides, on entend les polymères résultant de la polycondensation d'un ou plusieurs aminoacides tels les acides aminocaproïques, amino-7 heptanoïque, amino Il-undécanoïque, amino 12 dodécanoïque, etc...

d'un ou plusieurs lactames tels que caprolactame, oenantholactame, lauryllactame, etc...

d'un ou plusieurs sels ou mélanges de diamines telles l'hexaméthylène-diamine, la dodécaméthylènediamine, la métaxylylènediamine, le bis-p aminocyclohexylméthane, la triméthylhexaméthylène diamine, etc...

2

avec des diacides tels les acides isophtalique, téréphtalique, adipique, azélaïque, subérique, sébacique, dodécanedicarboxylique etc...

ou des mélanges de tous ces monomères ce qui conduit à des copolyamides.

Par polyétheramides, on entend aussi bien les polyétheramides statistiques (c'est-à-dire formés par l'enchaînement aléatoire des divers constituants monomères) que les polyétheramides séquencés, c'est-à-dire formés de blocs présentant une certaine longueur de chaîne de leurs divers constituants.

Les polyétheramides séquencés résultent de la copolycondensation de séquences polyamides à extrémités réactives avec des séquences polyéthers à extrémités réactives, telles que, entre autres :

1) Séquences polyamides à bouts de chaînes diamines avec des séquences polyoxyalkylènes à bouts de chaînes dicarboxyliques.

2) Séquences polyamides à bouts de chaînes dicarboxyliques avec des séquences polyoxyalkylènes à bouts de chaînes diamines obtenues par cyanoéthylation et hydrogénation de séquences polyoxyalkylènes alpha-oméga dihydroxylées aliphatique appelées polyétherdiols.

3) Séquences polyamides à bouts de chaînes dicarboxyliques avec des polyétherdiols, les polyétheramides obtenus étant, dans ce cas particulier, des polyétheresteramides.

La composition et la fabrication de tes polyétheresteramides ont été décrites dans les brevets français n° 74.18913 et 77.26678 au nom de la demanderesse et dont le contenu s'ajoute à la présente description.

La composition polymère de revêtement peut également contenir divers additifs tels que charges, agents mouillants, anti-oxydant, fongicides, anti-sédimentation, épaississants ainsi que des pigments et/ou colorants tels que le dioxyde de titane, le noir de carbone, l'oxyde de chrome, les oxydes de fer noir, rouge, jaune brun, le bleu de cobalt, etc...

On peut en général incorporer jusqu'à 50 % en poids d'additifs par rapport au poids total de la formulation contenant la composition selon l'invention.

La composition polymère en poudre selon l'invention peut être appliquée telle quelle sur le substrat à revêtir, soit sous forme liquide, c'est-à-dire après dispersion de la poudre dans un ou plusieurs solvants latents ou non.

Avant enduction, il est préférable de pratiquer un dégraissage de la surface du substrat à revêtir à l'aide, par exemple d'un solvant choisi dans la classe des cétones, des alcools ou des chlorocarbones.

Il est possible de faire subir au substrat à revêtir un ou plusieurs traitements de surface autres que le dégraissage afin d'améliorer l'adhérence du revêtement sur le substrat. A titre d'exemples, on peut citer le dépôt de primaire d'adhérence, des traitements de type oxydant tels que flammage, décharge coronna, action d'un plasma.

Lorsque le revêtement est appliqué sous forme de poudre, on peut tamiser la quantité de poudre nécessaire sur la surface du substrat à revêtir, opérer par projection électrostatique de la poudre à l'aide d'un pistolet, ou utiliser toute autre technique appropriée.

Dans le cas où le revêtement est appliqué sous forme liquide, l'enduction du substrat pourra être faite à l'aide d'un pistolet pneumatique, d'un rouleau applicateur, d'un pinceau, selon une technique de trempé ou par défilement sous un rideau du revêtement "liquide".

La filmification du revêtement nécessite un apport d'énergie qui est fourni par l'action d'un rayonnement électromagnétique dans le domaine des micro-ondes.

Les montages particulièrement bien adaptés à la filmification du revêtement selon l'invention sont ceux dans lesquels les ondes stationnaires sont excitées. Il est connu, en effet, que les cavités résonantes dans le domaine des micro-ondes sont le siège de réflexions multiples des champs électromagnétiques sur les parois conductrices de la cavité, ce qui conduit à l'existence des ventres et de noeuds de vibration de ces champs.

Dans les ventres de champ électrique, l'intensité du champ électrique est très élevée par rapport à ce que serait cette intensité en ondes progressives sans réflexions. Pour une puissance micro-ondes donnée, cet accroissement d'intensité est proportionnel à $\sqrt{Q}$, Q étant le facteur de surtension de la cavité résonante.

Par contre, dans les noeuds de champ électrique, l'intensité du champ électrique est pratiquement nulle.

La demanderesse a remarqué que lorsque le revêtement reste immobile pendant qu'il est soumis à un rayonnement électromagnétique selon l'invention, la filmification du revêtement est brutale sous les ventres du champ et l'échauffement est si intense qu'il provoque une fusion partielle du support et/ou entraîne sa déformation alors que sous les noeuds du champ, l'énergie du rayonnement électromagnétique n'est pas assez importante pour provoquer la filmification du revêtement.

Dans le procédé de filmification conforme à l'invention, le substrat à revêtir est mis en mouvement à l'intérieur de la cavité résonante de manière à ce que la surface du revêtement soit successivement exposée aux noeuds et aux ventres et donc que l'énergie reçue par le revêtement soit la plus uniforme possible.

Le mouvement du substrat à revêtir peut être linéaire, ce qui peut être obtenu par exemple en plaçant ledit substrat sur un tapis à défilement.

Le substrat à revêtir peut également être soumis à un mouvement de rotation, par exemple en utilisant un plateau tournant.

La vitesse de défilement ou de rotation ne doit pas être trop lente sans quoi la filmification n'est pas assurée de façon uniforme : certaines parties du revêtement restent trop longtemps sous les ventres ce qui peut provoquer déformation et/ou fusion du substrat, alors que d'autres parties n'atteignent pas la filmification car elles restent trop longtemps exposées sous les noeuds du champ.

Les exemples suivants illustrent l'invention sans toutefois la limiter.

EXAMPLE 1

A - PREPARATION DU REVETEMENT

On prépare une pâte de broyage en mélangeant une partie des constituants du revêtement en dispersion dans un ou plusieurs solvants.

On opère dans un disperseur à billes.

Une fois la dispersion effectuée, on ajoute le complément du revêtement et mélange intimement les constituants.

B - CONSTITUANTS DU REVETEMENT

| 1°) Pâte de broyage | |
|---|---|
| Elle comprend (en grammes) : | |
| - émulsion acrylique à 50 % en poids d'extrait sec (dureté Tukon : 9,4 ; 3 < pH < 4) | 10 |
| - butyldiglycol éther | 4 |
| - méthyléthylglycol | 5 |
| - aminopropanol | 0,6 |
| - polyfluorure de vinylidène (Melt Flow Index (MFI) mesuré selon la norme ISO 1133 : 5 g/10 mn) de granulométrie moyenne égale à 3 $\mu$m | 66 |
| - eau déminéralisée | 35 |
| - hexakisméthoxyméthylamine | 2 |
| - dioxyde de titane | 66 |
| - agent tensio-actif à base d'octylphénoloxypolyéthanol | 0,7 |
| - agent anti-mousse à base de polysiloxane | 0,7 |

| 2°) Complément | |
|---|---|
| - émulsion acrylique à 47 % en poids d'extrait sec (dureté Tukon : 6,5 ; 8,6 < pH < 9,2) | 54 |
| - agent tensio-actif à base de 2, 4, 7, 9 tétraméthyl-decyn-4,7-diol en solution dans l'éthylène glycol (concentration : 50 % en poids) | 1,2 |
| - diméthylphthalate | 13,5 |

## C - MISE EN OEUVRE DU REVETEMENT

Le revêtement préparé selon A est appliqué à la barre de 100 $\mu$m sur une plaquette de polypropylène (10 X 10 X 0,3 cm) préalablement dégraissée à la méthyléthylcétone.

Le polypropylène qui constitue la plaquette a une température de fusion de 163° C et une température de déformation sous charge de 0,46 MPa égale à 85° C mesurée selon la norme ASTM D 648.

La température de filmification du revêtement est égale à 172° C.

## D - PREPARATION DU MATERIAU COMPOSITE

Le substrat ainsi revêtu est placé sur un tapis à défilement dont la vitesse est réglée à 0,7 m/mn. On utilise un générateur de micro-ondes de puissance variable comprise entre 0 et 3 kW que l'on règle à 1,8 kW et un applicateur résonant qui permet d'obtenir l'excitation du mode $TE_{103}$ sur une largeur de 240 mm et une hauteur utile de 20 mm.

On fixe la 3e dimension à 63,1 mm de façon à obtenir une longueur d'onde guidée égale à environ 48 cm.

Une fois que la plaquette a fini de traverser la cavité résonante, la filmification est achevée.

Le revêtement d'épaisseur 25 $\mu$m présente un aspect brillant et lisse sur l'ensemble de la surface de plaquette qui a été revêtu; on n'observe pas de déformation de la plaquette revêtue.

On apprécie la qualité du revêtement à l'aide du test suivant, ci-après désigné par l'expression "test de résistance à la méthyléthylcétone"

On imbibe un coton avec de la méthyléthylcétone que l'on frotte sur le revêtement et compte le nombre d'allers et retours pour lequel il y a dégradation du revêtement et apparition du substrat.

Un nombre moyen d'allers et retours de 50 correspond à un revêtement de bonne qualité.

Le résultat du test à la méthyléthylcétone pratiqué sur la plaquette de l'exemple 1 est de 50 allers et retours.

## EXEMPLE 2 (COMPARATIF)

On enduit un substrat en reprenant les conditions opératoires décrites en 1.A, 1.B et 1.C.

Pour assurer la filmification du revêtement, on utilise un applicateur de type PULSAR ST qui délivre des ondes progressives.

La plaquette reste immobile à l'intérieur de l'enceinte et est exposée à l'action des micro-ondes pendant 1 mn.

On obtient uniquement le séchage du revêtement sans filmification.

Le test de résistance à la méthyléthylcétone donne un résultat de 0 aller et retour.

## EXEMPLE 3 (COMPARATIF)

On enduit un substrat en reprenant les conditions opératoires décrites en 1.A, 1.B et 1.C.

Pour assurer la filmification du revêtement, on utilise un applicateur de type PULSAR R59 pseudo-résonant équipé d'un générateur de puissance 1,2 kW délivrant des ondes stationnaires.

La plaquette reste immobile à l'intérieur de l'enceinte et est exposée à l'action des micro-ondes pendant 2 mn 30 secondes.

La température obtenue sur les ventres du champ atteint 180° C entraînant la fusion locale du substrat.

Dans les zones fondues, le test de résistance à la méthyléthylcétone donne un résultat de 50 allers et retours.

On obtient un matériau composite très déformé et dont la filmification du revêtement superficiel est discontinue.

## EXEMPLE 4 (COMPARATIF)

On enduit un substrat en reprenant les conditions opératoires décrites en 1.A, 1.B et 1.C.

Pour assurer la filmification du revêtement, on utilise un applicateur fonctionnant en cavité résonante équipé d'un générateur de puissance 1,2 kW. La plaquette est déposée sur un tapis dont la vitesse de défilement est de 0,2 m/mn.

Après traitement, la température de la plaquette atteint 50°C sans que cette dernière ne soit déformée.

## EXEMPLE 5 (COMPARATIF)

On enduit un substrat en reprenant les conditions opératoires décrites en 1.A, 1.B et 1.C.

Pour assurer la filmification du revêtement, on utilise un applicateur fonctionnant en cavité résonante équipé d'un générateur de puissance 1,2 kW. La plaquette reste immobile à l'intérieur de l'enceinte et est exposée à l'action des micro-ondes pendant 2 mn 30 secondes.

Après traitement, seules les zones correspondant aux ventres atteignent 200°C et présentent une véritable filmification.

Le test de résistance à la méthyléthylcétone pratiqué sur les zones fondues donne un résultat de 50 allers et retours.

On obtient un matériau composite très déformé dont la filmification du revêtement superficiel est discontinue.

## EXEMPLE 6 (COMPARATIF)

On enduit un substrat en reprenant les conditions opératoires décrites en 1.A, 1.B et 1.C.

Pour assurer la filmification du revêtement, on utilise un applicateur fonctionnant en cavité résonante équipé d'un générateur de puissance 1,2 kW.

La plaquette est placée sur un tapis dont la vitesse de défilement est de 0,5 m/mn.

Sous les ventres du champ la température atteint 130°C et redécroît rapidement jusqu'à 70°C au niveau des noeuds adjacents.

On obtient le séchage du revêtement et non pas sa filmification.

Le test de résistance à la méthyléthylcétone donne un résultat de 0 aller et retour.

## EXEMPLE 7 (COMPARATIF)

On reprend les conditions opératoires de l'exemple 6 mais avec une vitesse de défilement de la plaquette dans l'enceinte de 0,18 m/mn.

Sous les ventres du champ la température atteint 200°C et décroît jusqu'à 80°C au niveau des noeuds.

Le test de résistance à la méthyléthylcétone appliqué aux zones fondues donne un résultat de 50 allers et retours.

On obtient un matériau composite très déformé dont la filmification du revêtement superficiel est discontinue.

## EXEMPLE 8

## A - PREPARATION DU REVETEMENT

On mélange les constituants du revêtement qui sont sous forme de poudre de granulométrie moyenne égale à 100 µm.

| B - CONSTITUANTS DU REVETEMENT | |
|---|---|
| La composition en poudre comprend (en grammes) : | |
| - polyfluorure de vinylidène de granulométrie moyenne égale à 90 μm (MFI : 20 g/10 mn mesuré selon la norme ISO 1133) | 70 |
| - résine acrylique thermoplastique de granulométrie moyenne égale à 80 μm (dureté Tukon : 15-16 ; Tv : 60°C) | 30 |
| - dioxyde de titane | 20 |

## C - MISE EN OEUVRE DU REVETEMENT

Le revêtement décrit en B est appliqué par tamisage sur une plaquette de polypropylène (10 X 10 X 0,3 cm) préalablement dégraissée à la méthyléthylcétone.

L'épaisseur moyenne de poudre déposée est égale à 400 μm.

Le polypropylène qui constitue la plaquette a une température de fusion de 163°C et une température de déformation sous charge de 0,46 MPa égale à 85°C mesurée selon la norme ASTMD 648.

La température de filmification du revêtement est égale à 171°C.

## D - PREPARATION DU MATERIAU COMPOSITE

Le substrat ainsi revêtu est placé sur un tapis dont la vitesse de défilement est de 0,7 m/mn à l'intérieur de l'enceinte.

On utilise un générateur de puissance 1,8 kW et un applicateur résonant comme décrit en 1.D.

Après traitement, le revêtement d'épaisseur 120 μm présente un aspect brillant et uniforme.

La filmification du revêtement est continue et on n'observe pas de déformation de la plaquette revêtue.

Le test de résistance à la méthyléthylcétone donne un résultat de 52 allers et retours.

## EXEMPLE 9

On expose une plaquette de polypropylène non revêtu à l'action des micro-ondes dans les mêmes conditions qu'en 1.D.

Après traitement, la température superficielle de la plaquette est égale à 40°C.

## EXEMPLE 10

A l'aide d'un revêtement de mêmes caractéristiques que celui décrit en 1.A et 1.B, on enduit une plaquette de polyéthylène haute densité (PE hd) dont la température de fusion est égale à 130°C.

La plaquette de PE hd ainsi revêtue est soumise à l'action des micro-ondes de la même façon que décrit en 1.D.

Après traitement, le revêtement d'épaisseur 25 μm présente un aspect brillant et la filmification est continue.

On n'observe pas de déformation de la plaquette.

Le test de résistance à la méthyléthylcétone donne un résultat de 55 allers et retours.

## EXEMPLE 11

## A - PREPARATION DU REVETEMENT

On mélange à la turbine à grande vitesse les constituants du revêtement ci-après :

| B - CONSTITUANTS DU REVETEMENT | |
| --- | --- |
| La composition du revêtement comprend (en grammes) : | |
| - eau déminéralisée | 22,4 |
| - silicate de potassium | 1,12 |
| - émulsion acrylique à 46 % en poids d'extrait sec (Dureté Tukon : 12 ; pH 10) | 1,56 |
| - copolymère de vinyl pyrrolidone et d'acétate de vinyle (60/40) à 10 % en poids d'extrait sec dans l'eau | 1,12 |
| - émulsion acrylique à 12 % en poids d'extrait sec (Dureté Tukon : 10 ; 9 < pH < 10) | 28,7 |
| - Agent bactéricide et fongicide | 0,2 |
| - Polyamide 12 de granulométrie moyenne 10 $\mu$m (viscosité inhérente dans le métacresol à 25° C : 1,05) | 44,9 |

## C - MISE EN OEUVRE DU REVETEMENT

Le revêtement est appliqué à la barre de 100 $\mu$m sur une plaquette de polypropylène (10 X 10 X 0,3 cm) préalablement dégraissée à la méthyléthylcétone.

Le polypropylène qui constitue la plaquette a une température de fusion de 163° C et une température de déformation sous charge de 0,46 MPa égale à 85° C mesurée selon la norme ASTM D 648.

La température de filmification du revêtement est de 176° C.

## D - PREPARATION DU MATERIAU COMPOSITE

Le substrat ainsi revêtu est placé sur un tapis dont la vitesse de défilement est de 0,7 m/mn à l'intérieur de l'enceinte.

On utilise un générateur de puissance 1,8 kW et un applicateur résonant comme décrit en 1.D.

Après traitement, le revêtement d'épaisseur 25 $\mu$m présente un aspect satiné et lisse sur l'ensemble de la surface de la plaquette revêtue, on n'observe pas de déformation de la plaquette revêtue.

Le test de résistance à la méthyléthylcetone pratiqué sur la plaquette donne un résultat de 60 allers et retours.

**Revendications**

1. Matériau composite comprenant un substrat peu ou pas excitable par les micro-ondes et un revêtement à base d'une composition polymère en poudre excitable par les micro-ondes, caractérisé en ce que la température de fusion du substrat est inférieure à la température de filmification de la composition polymère.

2. Matériau composite selon la revendication 1 caractérisé en ce que l'épaisseur du revêtement est inférieure ou égale à 300 $\mu$m, et de préférence inférieure à 100 $\mu$m.

3. Matériau composite selon la revendication 1 ou 2, caractérisé en ce que le substrat est à base de polyoléfines perhalogénées ou non et de préférence à base de polyéthylène, polypropylène, polytétrafluoroéthylène, seuls ou en mélange.

4. Matériau composite selon l'une quelconque des revendications 1 à 3, caractérisé en ce que la composition polymère comprend :
- des homo ou copolymères qui dérivent de monomères tels que le méthacrylate de méthyle, l'acétate de vinyle, les esters supérieurs de l'acide acrylique et méthacrylique tels que le méthacrylate de n-butyle, l'acrylate d'isobutyle, les esters de l'acide fumarique, maléique ou les esters vinyliques, les acrylamides, les aminométhacrylates, les hydroxyacrylates, les N-méthylolacrylamides, les acides acrylique et méthacrylique, les halogénures de vinyle ou de vinylidène, les éthers alkyliques ou vinyliques,

- des copolymères de fluorure de vinylidène et de un ou plusieurs comonomères perfluorés ou chlorofluorés,

- des polyamides,

- et/ou des polyétheramides.

5. Matériau composite selon l'une quelconque des revendications 1 à 4, caractérisé en ce que la composition polymère contient du polyfluorure de vinylidène.

6. Matériau composite selon l'une quelconque des revendications 1 à 4, caractérisé en ce que la composition polymère contient des additifs et/ou des charges et/ou des pigments et/ou des colorants de préférence jusqu'à 50 % en poids de la formulation totale.

7. Procédé de fabrication d'un matériau composite tel que défini dans les revendications 1 à 5, caractérisé en ce qu'on enduit le substrat à l'aide de la composition polymère puis le soumet à un rayonnement électromagnétique dans le domaine des micro-ondes qui délivre des ondes stationnaires.

8. Procédé de fabrication d'un matériau composite selon la revendication 7, caractérisé en ce que la composition polymère est appliquée sur le substrat sous forme pulvérulente.

9. Procédé de fabrication d'un matériau composite selon la revendication 7, caractérisé en ce que la composition polymère est appliquée sur le substrat sous forme liquide.

10. Procédé de fabrication d'un matériau composite selon l'une quelconque des revendications 7, 8 ou 9, caractérisé en ce que le substrat revêtu ne reste pas immobile, lorsqu'il reçoit le rayonnemnt électromagnétique.

Office européen
des brevets

**RAPPORT DE RECHERCHE EUROPEENNE**

Numero de la demande

EP 90 40 0720

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 051 660 (W.R. GRACE & CO.) <br> * Revendications 1,6; page 1, lignes 16-58; page 3, lignes 5-18; page 3, ligne 37 - page 4, ligne 9 * | 1-4,6 | C 08 J 7/04 <br> C 09 D 5/03 |
| A | | 7-10 | |
| | --- | | |
| A | WO-A-8 501 294 (DOW CHEMICAL CO.) <br> * Revendications 1-11 * | 1,3,4 | |
| | ----- | | |

**DOMAINES TECHNIQUES RECHERCHES (Int. Cl.5)**

C 08 J
B 05 D

Le présent rapport a été établi pour toutes les revendications

| Lieu de la recherche | Date d'achèvement de la recherche | Examinateur |
|---|---|---|
| LA HAYE | 11-07-1990 | HALLEMEESCH A.D. |